# EUROPEAN PATENT SPECIFICATION

(11) **EP 3 195 654 B1**
(45) Date of publication and mention of the grant of the patent: **11.12.2019**
(21) Application number: 14781889.2
(22) Date of filing: 09.10.2014
(51) Int. Cl.: H04W 36/04, H04W 84/00

(54) **METHOD FOR ACTIVATING AND DEACTIVATING NOMADIC NODES IN A NETWORK**
VERFAHREN ZUM AKTIVIEREN UND DEAKTIVIEREN NOMADISCHER KNOTEN IN EINEM NETZWERK
PROCÉDÉ D'ACTIVATION ET DE DÉSACTIVATION DE NOEUDS NOMADES DANS UN RÉSEAU

(43) Date of publication of application: 26.07.2017
(73) Proprietor: Huawei Technologies Duesseldorf GmbH, 40549 Düsseldorf (DE)
(72) Inventor: BULAKCI, Oemer, 80992 Munich (DE); EICHINGER, Josef, 80992 Munich (DE); ZHOU, Chan, 80992 Munich (DE)
(74) Representative: Kreuz, Georg Maria
(86) International application number: PCT/EP2014/071616
(87) International publication number: WO 2016/055108

(56) References cited:
- EP-A1- 2 387 279
- US-A1- 2012 087 303
- US-A1- 2012 282 932
- US-A1- 2013 183 971
- "3rd Generation Partnership Project; Technical Specification Group Services and System Aspects; Study on architecture enhancements to support Proximity-based Services (ProSe) (Release 12)", 3GPP DRAFT; 23703-081-PROSE-RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 26 November 2013 (2013-11-26), XP050764394, Retrieved from the Internet: URL:http://www.3gpp.org/ftp/tsg_sa/WG2_Arc h/Latest_SA2_Specs/Latest_draft_S2_Specs/ [retrieved on 2013-11-26]

## Description

### TECHNICAL FIELD

The present invention is directed to methods for respectively activating and deactivating Nomadic Nodes (NNs) in a network. The present invention is also directed to a system comprising NNs and a network, the system being configured to activate and/or deactivate NNs. The present invention particularly relates to an efficient integration of NNs, which are preferably wireless access nodes mounted onto vehicles, into wireless networks, for example, LTE and future systems beyond LTE.

### BACKGROUND

Current and next generation mobile and wireless communication systems, for example, LTE, LTE-A, LTE new Releases, and Fifth Generation (5G), aim at providing ubiquitous user experience with the utmost in quality. To this end, flexible network deployment is desired, in particular the flexibility to increase the network capacity and/or to extend a cell coverage on demand.

One approach known in the state of the art for providing coverage and/or capacity is to deploy fixed small cells, for example picocells, femtocells, and relay nodes overlaid by macrocells. These small cells may be deployed by operators at certain locations with power supply facilities, and the locations can be determined, for example, via network planning. Access nodes of the small cells are usually well elevated (e.g., 5m), which reduces the impact of fading, for example, on the wireless backhaul link of relay nodes. Macrocells can also provide a backhaul link to relay nodes, for example, in LTE-A Type 1 relay node deployments (in 3GPP TR36.814 v9.0.0). In case of picocells, the backhaul can be provided by wired connections, e.g., fiber, or by wireless connections, e.g., microwave links.

Another approach known in the state of the art for providing temporal service provisioning is the use of movable relays. Operator-owned movable relays can be moved to a pre-determined service region, and can then be directly activated (plug-and-play nature and manual control). Further, operator-owned moving relays, as for instance described in 3GPP TR 36.836 v12.0.0, can be mounted on public transportation vehicles or high-speed trains, in order to serve passengers or users on the road or at bus stations.

In the aforementioned approaches, operators typically have the ownership of the wireless access nodes, and can control the availability of the access nodes. When the access nodes are activated, they typically perform a registration process continuously, until they are granted by the network.

A promising technology targeted for flexible network deployment bases on NNs. An NN is preferably a movable access node, which can provide coverage extension and/or capacity improvement on demand. NNs can be mounted on vehicles, for example, within a car-sharing fleet.

However, NNs are associated with some uncertainty with regards to their availability, i.e. whether an NN is or is not available in a target service region that requires on-demand increase of network capacity and/or extension of the cell coverage area. The uncertainty is, for instance, caused by human behavior (drivers). That is, human behavior determines the location of vehicles, and can only be predicted to some extent (e.g. a parking lot around a shopping mall for a given day time). Therefore, in case of NN operation, the network needs to take decisions on-the-fly, which cope with this uncertainty.

Accordingly, an autonomous operation of a dynamic network, in which NNs occasionally change locations and availability, is challenging. In particular, NN activation and the corresponding process should be carried out in an autonomic manner without additional manual control, as for instance by network planning teams, in order to increase the operation efficiency. Operation efficiency is particularly important given that NNs may operate on vehicle battery. That means, the capacity of a vehicle battery needs to be shared appropriately between conventional vehicle functions and NN functions, and NNs should be activated on demand, for instance based on target service requirements in a target service region, in order to optimize the achievable gains. In addition, since the activation of NNs depends on the availability of other NNs in the target service region, a tight coordination is needed to provide uninterrupted service.

US20120282932 discloses an apparatus. The apparatus includes a communication control circuitry configured to detect on the basis of a predetermined criterion a need to suspend the operation of a mobile relay base station connected to the apparatus, control the mobile relay base station to suspend its operation, control the apparatus to connect to the user equipment performing a handover from the mobile relay base station to the apparatus prior the suspension of the mobile relay base station, detect on the basis of a predetermined criterion a need to resume the operation of the mobile relay base station, and control the mobile relay base station to resume its operation.

US20130183971 discloses only Systems or methods for managing a handover (e.g. over a Un or Uu connection or interface) of a relay from an eNB such as a source eNB to another eNB such as a target eNB. The source eNB or DeNB may provide a backhaul link to the relay and the relay may provide an access link to a user equipment (UE). To manage the handover, access information may be received and a determination may be made regarding whether one or more target eNBs may be capable of handling the relay based on the access information. Additionally, the relay that may be handed over may be configured to use radio access network (RAN) sharing, a mobility management entity (MME) may be selected, and/or a EUTRAN radio access bearer (E-RAB) may be modified.

EP2387279A1 discloses methods for cell (re)selection within a heterogeneous mobile communication network. The methods suggest a cell (re)selection scheme, which is providing a mechanism to determine at a mobile terminal whether it is remaining within a micro-cell's footprint or whether it can be expected that the mobile terminal only perceives a high signal quality from the micro cell for a short time duration. In the first case, the mobile terminal may advantageously decide to camp on the micro cell, i.e. to select the micro cell as its new serving cell, while in the latter case the mobile terminal should preferably stay camping in its current serving cell, which is typically a macro cell.

Document "3rd Generation Partnership Project; Technical Specification Group Services and System Aspects; Study on architecture enhancements to support Proximity-based Services (ProSe) (Release 12)" discloses a ProSe enabled UE needs to be able to discover and be discoverable. The discoverable UE needs to announce its identity and the discovering UE needs to be able to extract the identity of the announcing UE. The mechanism may be a push or pull mechanism such that the discovery process is initiated by the announcer or by the monitoring UE. The mechanism may depend on the settings for the procedure. The procedure of discovery may, according to the requirements, be a restricted discovery procedure or an open procedure, i.e. ProSe discovery that only takes place with explicit permission from the UE being discovered or ProSe discovery without explicit permission from the UE being discovered. US20120087303A1 discloses a communication method of a vehicular access point, a vehicular user equipment, and a macro base station for a user present in a vehicle capable of effectively forming an operational relationship between the vehicular access point and the macro base station using a plurality of operational modes.

### SUMMARY

In view of the above-mentioned disadvantages of the state of the art, and the challenges for NN based operation, the present invention aims to improve the state of the art. In particular, the present invention has the object to provide a method and system for enabling an autonomous and more efficient operation of a dynamic network including NNs. In addition, the present invention can be usable for networks, in which NNs do not necessarily belong to the operator, and in which NNs change their location and availability. In particular, the present invention aims to provide activation and deactivation processes for NNs, which are carried out automatically without the need for manual control.

The invention particularly aims to address an efficient integration of NNs into wireless and mobile communications systems. To this end, mechanisms are proposed, wherein decisions are taken by the network control units to describe when, how and where to activate and deactivate NNs. A network control unit is, e.g., a decision-making entity of which functionality may reside at a base station or an operation, administration and maintenance (OAM) system.

The above-mentioned object of the present invention is achieved by the solution provided in the enclosed independent claims. Advantageous implementations of the present invention are further defined in the respective dependent claims. In particular, in the present invention NNs are put into operation, i.e. are activated, based on demand requirements, for instance coverage and capacity, in a region, in which the NNs are residing. Further, NNs are taken from operation, i.e. are deactivated, when, e.g., the service is not needed anymore. The key aspect of the present invention is a context-aware activation and deactivation of NNs that efficiently meets the service requirements of a wireless network.

A first aspect of the present invention provides a method for activating at least one Nomadic Node, NN, in a network, comprising: sending, by the at least one NN provided on a vehicle, a trigger message to the network, when the vehicle enters a determined motion state and/or location state and/or operation state, sending, by the at least one NN, context information to the network, determining, by the network, whether the at least one NN is an appropriate active NN or potential NN based on the received context information, and instructing, by the network, the at least one NN to switch to an active NN mode or a potential NN mode, if it determines that the at least one NN is an appropriate active NN or potential NN.

The activation method of the first aspect enables on demand temporal densification of nodes of a network, and thus enables increased capacity and/or extended cell coverage. In particular, the network capacity can be increased, or a cell coverage area can be extended, on demand in an automatic manner. Therefore, the activation method allows for a more efficient operation and integration of NNs into a wireless communication network. The activation method is further context aware and specifically aware of the state of the vehicle. As a consequence, for instance the capacity of a vehicle battery can be shared appropriately between conventional vehicle functions and NN functions. Advantageously, NNs can be activated based on target service requirements in a target service region.

The activation method may apply to a single NN as well as to a plurality of NNs. An NN may serve out-vehicle users as well as in-vehicle users. A user may be user equipment (UE) as in the LTE standard, or may be a machine like a wireless sensor and actuator. Herein, UE and mobile terminal (MT) are used interchangeably. Further, an NN may include a multi-operator support.

A vehicle may be any kind of mobile facility. For example, a vehicle can be a car, a truck, a train, an airplane, a helicopter. However, a vehicle can also be a mobile carrier of an NN, for example, a cell phone, a tablet, a computer or the like. The NN can itself be a portable facility.

Simple motion states of the vehicle may include "moving vehicle" and "not moving vehicle". A simple location state of the vehicle may be its current position defined by latitude and longitude, or angular and radial distance with respect to a reference point, e.g., base station. Simple operation states may be "switched on vehicle" and "switched off vehicle".

The active NN mode defines an NN, which is actively serving as a node of the network, i.e. an active NN is the same as a serving NN. The potential NN mode defines an NN, which is available and already admitted by the network, but is not actively serving as a node. NNs, which are not yet available and/or not yet admitted by the network, may be in an idle NN mode or UE mode.

In the method of the first aspect, if the network determines that the at least one NN is not an appropriate active NN or potential NN, the at least one NN is preferably not activated. This can be attributed to several reasons, one reason being that the backhaul link quality of the at least one NN is not good enough to fulfil the service requirements. In this case, for example, UEs may directly connect to the base station. In case that the at least one NN is not to be activated, the network may actively instruct the at least one NN to stay in or enter e.g. an idle NN mode. To this end, the network may send a feedback message with the instruction to the at least one NN. Alternatively, the network can simply not react to the context information of the at least one NN, i.e. it does not provide any instruction to the at least one NN. In this case, the at least one NN may wait for a determined period of time from the sending of the context information. This period of time may be measured by a counter of the at least one NN. If the at least one NN does not receive any instruction after the determined period of time, it may stay in or enter e.g. the idle NN mode.

In an alternative method to the method of the first aspect, it may be possible that not the at least one NN sends the trigger message, but that the network sends a trigger message to the at least one NN, when the network determines that the at least one NN enters a target service region and/or the at least one NN is to be switched to an active NN mode or a potential NN mode. This may in particular be the case for network-based location services. Except for the step of sending the trigger message, the alternative method corresponds to the steps of the method of the first aspect.

In a first implementation form of the method according to the first aspect as such, the vehicle enters the determined motion state, if at least one of the following events occurs: at least one engine of the vehicle is at least partly switched off, the vehicle enters a parking mode, and the speed of the vehicle is within a determined range for a determined period of time.

Thereby it is ensured that during its operation, an active NN is stationary or at least moves only with low-speed or with speed within a determined range. The location or the region of the NN is therefore more certain, and services can be provided more reliably. Stationary active NNs may be on vehicles, which are parked, for example, along a road or in a parking lot. In such locations, where many vehicles are parked, demand for network capacity and/or coverage can be high, e.g., due to typically large number of people in the vicinity of the vehicles.

In a second implementation form of the method according to the first aspect as such or according to the first implementation form of the first aspect, the vehicle enters the determined location state, if at least one of the following events occurs: the vehicle enters a target region, the vehicle is notified by a push service in its current region, and the at least one NN determines at least a determined number of user equipments, UEs, in its vicinity.

Thereby it is ensured that the NNs are activated on demand, i.e. only in a region in which e.g. increased network capacity is required. Thus, NNs are not activated if it is not necessary, which allows for a better efficiency, particularly concerning vehicle batteries.

In a third implementation form of the method according to the first aspect as such or according to any previous implementation form of the first aspect, the vehicle enters the determined operation state, if at least one of the following events occurs: the vehicle starts charging, a battery level of the vehicle is equal to or increases above a determined threshold value, and a NN mode of the vehicle is manually switched on.

Thereby it is ensured that NNs, which typically operate on the vehicle battery, are reliably supplied with power, and are thus also more reliable in the network. Instead of or in addition to operating on the vehicle battery, NNs may also have their own battery and/or power generation entity. For example, this can be realized via regenerative energy sources or energy harvesting methods. For instance, NNs may work on solar energy. To this end, NNs may include modules, which are suitable for harvesting solar energy and converting it into electric power, e.g. solar cell modules.

In a fourth implementation form of the method according to the first aspect as such or according to any previous implementation form of the first aspect, the at least one NN sends the context information to the network via a direct communication channel for NN context information and/or at least one vehicle-to-vehicle link.

If enough available resources exist, a direct and fast communication channel to the network may be preferred. A vehicle-to-vehicle link can allow the sending of context information with more efficient usage of network resources due to proximity of vehicles or without the need of further network resources, because the information is sent via an already existing link between a vehicle, i.e. another NN, and the network.

The direct communication channel may be a dedicated signaling channel. Alternatively, the context information may be sent via a shared channel or via a random access channel. A vehicle-to-vehicle link is a link between two vehicles, and may be implemented by, e.g. according to IEEE802.1 1p. The at least one NN may connect to a further NN on another vehicle to send the context information via a link, which the further NN established with the network.

In a fifth implementation form of the method according to the first aspect as such or according to any previous implementation form of the first aspect, the context information comprises at least one of: information indicating a backhaul link quality of the at least one NN, information indicating a vehicle-to-vehicle link quality used by the at least one NN, a type identification information, type ID, of the at least one NN, a driver profile of the vehicle, location information of the at least one NN, a predicted battery level for a given Radio Access Technology, RAT, and communication type, such as in-band or out-band operation.

The benefits of NNs can be employed with a flexible backhaul, in particular if the capacity of the backhaul link qualitatively is high. This is due to the fact that the backhaul plays a crucial role in the end-to-end user performance. The backhaul of an NN can be realized via a wireless connection, for example in-band half-duplex operation, as well as a wired connection.

The type ID of an NN may define whether the NN is a regular operation NN or an emergency NN. A regular operation NN follows, for instance, the method of the first aspect. An emergency NN may be directly started, i.e. activated, without receiving an explicit instruction from the network.

In a sixth implementation form of the method according to the first aspect as such or according to any previous implementation form of the first aspect, the context information comprises: a Signal to Interference plus Noise Ratio, SINR, long-term and/or short term backhaul link measurement, and/or information indicating available RATs for the backhaul link.

The backhaul link measurements may be performed per RAT. The measurements allow activating NNs with a high backhaul link quality, which can improve the network performance.

In a seventh implementation form of the method according to the first aspect as such or according to any previous implementation form of the first aspect, the context information comprises: information indicating an access link quality of the at least one NN to at least one target UE, and/or information indicating available RATs for an access link of the at least one NN to at least one target UE.

The access link quality of the NN to the at least one target UE may be RAT-specific, i.e. information about a link quality for each RAT may be included in the context information. The activation of NNs with better access link quality to target UEs can improve the performance of services provided by the network to users.

In an eighth implementation form of the method according to the first aspect as such or according to any previous implementation form of the first aspect, the determining, by the network, whether the at least one NN is an appropriate active NN or potential NN is further based on available network information and/or on a network status.

By taking into account the network status and information, when activating new NNs, the network can operate even more efficiently.

In a ninth implementation form of the method according to the first aspect as such or according to any previous implementation form of the first aspect, the available network information and/or network status comprises at least one of: context information of at least one other active NN in the network, information indicating a load on at least one active NN, a backhaul link, and/or a macro-cell of the network, demand information or a predicted demand duration of the network, and predicted performance gains for the network caused by a potential switching of the at least one NN to the active NN mode.

A second aspect of the present invention provides a method for deactivating at least one Nomadic Node, NN, in a network, comprising: sending, by the at least one NN provided on a vehicle, a trigger message to the network, when the vehicle enters a determined motion state and/or location state and/or operation state, determining, by the network, whether the at least one NN is an active NN or a potential NN, and removing, by the network, the at least one NN from a list of potential NNs, if the at least one NN is a potential NN, or instructing, by the network, the at least one NN to switch out of an active NN mode after a determined transition time, if the at least one NN is an active NN.

The transition time may be equal to or greater than zero. In other words, it is also possible to immediately switch the at least one NN out of the active NN mode. The deactivation method of the second aspect can enable to reduce on demand the density of nodes of a network. This can allow for a more efficient operation of the network, if e.g. high capacity and large cell coverage are not required. Like the activation method of the first aspect, also the deactivation method of the second aspect is context aware and aware of the state of the vehicle. Thereby, for instance again the capacity of a vehicle battery can be shared appropriately between conventional vehicle functions and NN functions. Furthermore, NNs are deactivated and can serve other purposes, e.g., when not in a target service region. The deactivation method functions automatically and efficiently, for example, when a NN leaves a target service region.

In a first implementation form of the second aspect as such, the vehicle enters the determined motion state, if at least one of the following events occurs: at least one engine of the vehicle is at least partly switched on, a partially switched off engine of the vehicle is switched on, the vehicle leaves a parking mode, and the speed of the vehicle is larger than a determined threshold value.

Thereby it is ensured that during operation, an active NN is stationary or at least moves only with low-speed. The location or the region of an active NN is therefore more certain, and services can be provided more reliably.

In a second implementation form of the second aspect as such or according to the first implementation form of the second aspect, the vehicle enters the determined location state, if at least one of the following events occurs: the vehicle leaves a target region, and the vehicle is notified by a push service in its current region.

Thereby it is ensured that the NNs are activated on demand, i.e. only in a region, in which e.g. an increased network capacity is required. When they leave such a region NNs are deactivated. Thus, NNs are not activated if not necessary, which allows for a better efficiency, particularly concerning vehicle batteries.

In a third implementation form of the second aspect as such or according to any previous implementation form of the second aspect, the vehicle enters the determined operation state, if at least one of the following events occurs: the vehicle stops charging, a battery level of the vehicle is equal to or decreases below a determined threshold value, and a NN mode of the vehicle is manually switched off.

Thereby, it is ensured that NNs, which typically operate on vehicle battery, are reliably supplied with power and thus are also more reliable in the network. If they are not reliably supplied, they may be deactivated.

In a fourth implementation form of the second aspect as such or according to any previous implementation form of the second aspect, the determined transition time is at least one of: a time, during which the at least one NN to be deactivated and at least one other active NN in the network are simultaneously serving at least one common UE, a time, during which the at least one NN to be deactivated is synchronized with at least one other active NN in the network, a time, during which the UEs associated with the at least one NN to be deactivated are handed over or associated to other access nodes, and a time, which is determined based on requirements of at least one service provided by the network.

Thereby, uninterrupted service provisioning is enabled, when one or even more NNs are deactivated.

In a fifth implementation form of the second aspect as such or according to any previous implementation form of the second aspect, the at least one deactivated NN enters an idle NN mode, in which the at least one NN has an active UE mode for communicating as a mobile terminal and/or a moving relay mode for serving at least one UE.

NNs can, for example, receive target region service maps via mobile terminal communication, and can update their location. Thus, the NNs know when to send a trigger message for activation in a target service region. By means of the moving relay mode, NNs can at the same time serve users, e.g., inside the vehicle.

A third aspect of the present invention provides a system comprising at least one Nomadic Node, NN, provided on a vehicle and a network, wherein the at least one NN is configured to send a trigger message to the network, when the vehicle enters a determined motion state and/or location state and/or operation state, the at least one NN is configured to send context information to the network, the network is configured to determine, whether the at least one NN is an appropriate active NN or potential NN based on the received context information, and the network is configured to instruct the at least one NN to switch to an active NN mode or a potential NN mode, if it determines that the at least one NN is an appropriate active NN or potential NN.

In a first implementation form of the system according to the third aspect as such, the vehicle enters the determined motion state, if at least one of the following events occurs: at least one engine of the vehicle is at least partly switched off, the vehicle enters a parking mode, and the speed of the vehicle is within a determined range for a determined period of time.

In a second implementation form of the system according to the third aspect as such or according to the first implementation form of the third aspect, the vehicle enters the determined location state, if at least one of the following events occurs: the vehicle enters a target region, the vehicle is notified by a push service in its current region, and the at least one NN determines at least a determined number of user equipments, UEs, in its vicinity.

In a third implementation form of the system according to the third aspect as such or according to any previous implementation form of the third aspect, the vehicle enters the determined operation state, if at least one of the following events occurs: the vehicle starts charging, a battery level of the vehicle is equal to or increases above a determined threshold value, and a NN mode of the vehicle is manually switched on.

In a fourth implementation form of the system according to the third aspect as such or according to any previous implementation form of the third aspect, the at least one NN is configured to send the context information to the network via a direct communication channel for NN context information and/or at least one vehicle-to-vehicle link.

In a fifth implementation form of the system according to the third aspect as such or according to any previous implementation form of the third aspect, the context information comprises at least one of: information indicating a backhaul link quality of the at least one NN, information indicating a vehicle-to-vehicle link quality used by the at least one NN, a type identification information, type ID, of the at least one NN, a driver profile of the vehicle, location information of the at least one NN, and a predicted battery level for a given Radio Access Technology, RAT.

In a sixth implementation form of the system according to the third aspect as such or according to any previous implementation form of the third aspect, the context information comprises: a Signal to Interference plus Noise Ratio, SINR, long-term and/or short term backhaul link measurement, and/or information indicating available RATs for the backhaul link.

In a seventh implementation form of the system according to the third aspect as such or according to any previous implementation form of the third aspect, the context information comprises: information indicating an access link quality of the at least one NN to at least one target UE, and/or information indicating available RATs for an access link of the at least one NN to at least one target UE.

In an eighth implementation form of the system according to the third aspect as such or according to any previous implementation form of the third aspect, the determining, by the network, whether the at least one NN is an appropriate active NN or potential NN is further based on available network information and/or on a network status.

In a ninth implementation form of the method according to the third aspect as such or according to any previous implementation form of the third aspect, the available network information and/or network status comprises at least one of: context information of at least one other active NN in the network, information indicating a load on at least one active NN, a backhaul link, and/or a macro-cell of the network, demand information or a predicted demand duration of the network, and predicted performance gains for the network caused by a potential switching of the at least one NN to the active NN mode.

The system of the third aspect and its implementation forms achieve the same advantages as the method of the first aspect and its implementation forms, respectively.

A fourth aspect of the present invention provides a system comprising at least one Nomadic Node, NN, provided on a vehicle and a network, wherein the at least one NN is configured to send a trigger message to the network, when the vehicle enters a determined motion state and/or location state and/or operation state, the network is configured to determine, whether the at least one NN is an active NN or a potential NN of the network, and the network is configured to remove the at least one NN from a list of potential NNs, if the at least one NN is a potential NN, and the network is configured to instruct the at least one NN to switch out of an active NN mode after a determined transition time, if the at least one NN is an active NN.

In a first implementation form of the fourth aspect as such, the vehicle enters the determined motion state, if at least one of the following events occurs: at least one engine of the vehicle is at least partly switched on, a partially switched off engine of the vehicle is switched on, the vehicle leaves a parking mode, and the speed of the vehicle is larger than a determined threshold value.

In a second implementation form of the fourth aspect as such or according to the first implementation form of the fourth aspect, the vehicle enters the determined location state, if at least one of the following events occurs: the vehicle leaves a target region, and the vehicle is notified by a push service in its current region.

In a third implementation form of the fourth aspect as such or according to any previous implementation form of the fourth aspect, the vehicle enters the determined operation state, if at least one of the following events occurs: the vehicle stops charging, a battery level of the vehicle is equal to or decreases below a determined threshold value, and a NN mode of the vehicle is manually switched off.

In a fourth implementation form of the fourth aspect as such or according to any previous implementation form of the fourth aspect, the determined transition time is at least one of: a time, during which the at least one NN to be deactivated and at least one other active NN in the network are simultaneously serving at least one common UE, a time, during which the at least one NN to be deactivated is synchronized with at least one other active NN in the network, a time, during which the UEs associated with the at least one NN to be deactivated are handed over or associated to other access nodes, and a time, which is determined based on requirements of at least one service provided by the network.

In a fifth implementation form of the fourth aspect as such or according to any previous implementation form of the fourth aspect, the at least one deactivated NN is configured to enter an idle NN mode, in which the at least one NN has an active UE mode for communicating as a mobile terminal and/or a moving relay mode for serving at least one UE.

The system of the fourth aspect and its implementation forms achieve the same advantages as the method of the second aspect and its implementation forms, respectively.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be fully formed by eternal entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above-described aspects and implementation forms of the present invention will be explained in the following description of specific embodiments in relation to the enclosed drawings, in which
- Fig. 1a: shows a basic embodiment of a method according to the present invention.
- Fig. 1b: shows a basic embodiment of a method according to the present invention.
- Fig. 2: shows an example of an NN arriving at a target region, and another NN leaving the target region.
- Fig. 3: shows an example of a serving NN leaving a target region, and another NN being the next serving NN selected from the candidate NN list.
- Fig. 4: shows a NN mode/state transition diagram.
- Fig. 5: shows a flow diagram of a method according to the present invention.
- Fig. 6: shows schematically the communication between a vehicle and an NN when the NN becomes available to the network.

### DETAILED DESCRIPION OF EMBODIMENTS

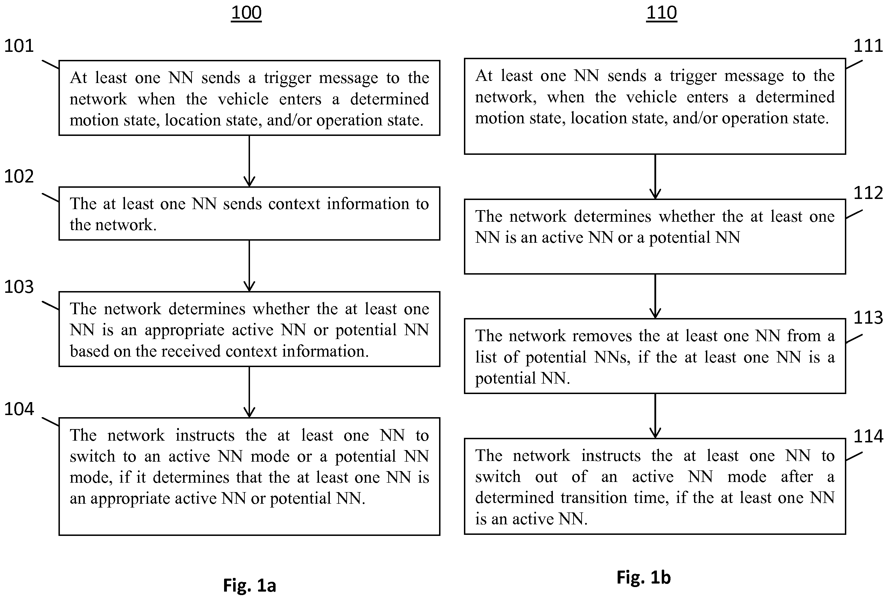

Fig. 1a shows a method 100 according to a basic embodiment of the present invention for activating at least one Nomadic Node (NN) in a network. The method starts with a step 101, in which at least one NN sends a trigger message to the network, when the vehicle enters a determined motion state, location state, and/or operation state

For example, when a new NN becomes available, the new NN sends the trigger message to the overlaying radio cell covering the area to report its availability. The trigger message is sent when certain conditions are fulfilled for the motion state, location state or operation state of the vehicle.

For instance, the trigger message may be sent:
- when an engine of the vehicle is switched off and/or after the vehicle enters parking mode;
- when the speed of the vehicle is within a determined range for a predicted duration, for instance, in case of a traffic jam;
- when the vehicle enters a target service region determined by its navigation system and/or communicated by other NNs that are in the target service region;
- when the vehicle is notified by a push service in the region where the NN resides;
- when the vehicle is plugged in for charging;
- when the vehicle battery status increases above a determined threshold value while charging;
- when the NN determines a sufficient number of users in its vicinity, where the sufficient number of users may be determined based on threshold values communicated by the network, and/or the number of users matches the current status of the NN, for example, estimated battery lifetime per Radio Access Technology (RAT);
- when the owner of the vehicle manually switches on the NN mode.

Specifically, the vehicle may enter the above-mentioned determined motion state, if at least one of the following events occurs: at least one engine of the vehicle is at least partly switched off, the vehicle enters a parking mode, and the speed of the vehicle is within a determined range for a determined period of time.

Specifically, the vehicle may enter the above-mentioned determined location state, if at least one of the following events occurs: the vehicle enters a target region, the vehicle is notified by a push service in its current region, and the at least one NN determines at least a determined number of UEs in its vicinity.

Specifically, the vehicle may enter the above-determined operation state, if at least one of the following events occurs: the vehicle starts charging, a battery level of the vehicle is equal to or increases above a determined threshold value, and a NN mode of the vehicle is manually switched on.

Network operators can determine target service regions, in which vehicles can be parked and in which the vehicles can provide service via their NNs in terms of increasing the cell coverage and network capacity. These places can be close to hot spots, for example, close to shopping malls or business centers. Such parking lots close to dense human existence can be potential target service regions.

Target service region maps can be created offline, and can be sent to NNs in advance. The target service regions can be identified via network planning tools, where, for instance, coverage holes and capacity needs can be identified. Further, the network statistics and radio performance indicators collected by the network can be utilized to determine target service regions. Available charging options can be used in determining the target service regions. For example, a region with better conditions for energy harvesting and/or regenerative energy sources and/or wireless charging and/or wired charging can be taken into account.

A target service region can define a geographical location with time stamps. For example, the size of the region may change during the day time as well as the regions may change. Target service region maps can be dynamically updated, for example, depending on the user load. In particular, the network can update the information about the target service regions in the NNs on a need-basis or regularly (long-term or midterm). For example, in case of an event like a concert, the target service region maps will be updated based on time (e.g., 18:00-20:00 CET) and space (e.g., GPS/GLONASS coordinates of the parking lots around the event). The geographical location can imply GNSS coordinates, e.g., GPS, cell ID, e.g., as in an LTE system, angular position, e.g., azimuth and elevation, along with radial distances with respect to a reference point or node, e.g., a BS.

The at least one NN sends the context information to the network via a direct communication channel for NN context information and/or at least one vehicle-to-vehicle link.

A target service region can be considered with dimensions of space and time. It can be defined by a map with time stamps and stored in a vehicle. A NN may initiate trigger messages to the network only if it is in the target service region. By defining the target service regions, the signaling overhead can be clearly reduced and clear energy savings can be possible.

Existing fixed access node deployments can be also taken into account, for example, a region that can be served by activating picocells may shrink the target service region of NNs. When target service regions are updated, this update information can be communicated to the relevant NNs. NNs may receive the updates from the network wirelessly or via a wired backhaul, e.g. while charging, or from other NNs via, e.g. a vehicle-to-vehicle communication link.

In addition, the target service regions may be different for NNs having different access link capabilities, for example WiFi or licensed band operation at 2 GHz or mm-Wave bands. The target service regions may also be based on the vehicle context information, such as current battery status of the vehicle and/or charging capabilities of the vehicle. For example, a target service region may be dedicated to long-term NN operation and thus only NNs with a possibly longer battery support may be eligible for that target service region.

In a next step 102 of the method 100, the at least one NN sends context information to the network. That is, the new NN sends its context information to the network, for example to the BS of a macrocell, and the context information can comprise at least one of:
- backhaul link quality;
- SINR long-term (shadowing-related) and/or short-term backhaul link measurements;
- an access link quality toward the target mobile terminals, e.g. hotspot;
- available RATs for the backhaul link and/or available RATs for the access link; depending on NN context info and/or available information at the BS (e.g. a Line-of-Sight connection on backhaul link, UE capabilities in the target service region), the BS can decide on the RAT for backhaul and access links, for instance, WiFi and/or licensed band operation at 2 GHz or mm-Wave band; in addition, the BS can decide on the communication type, for instance, inband or outband operation, and licensed-assisted access (LAA);
- a predicted parking duration by the vehicle of the NN;
- battery level and/or predicted battery level per RAT; the battery may be charged, while the NN is moving. Hence, the NN may only send an update when the battery status is above or below a determined threshold value;
- charging capabilities of the vehicle and/or NN, e.g., energy harvesting, charging via regenerative energy sources, wireless charging, and/or wired charging;
- human behavior-related messages, e.g. a driver profile and/or driver profile group;
- processing power, e.g., CPU, GPU, and RAM capabilities;
- antenna gain and/or antenna configuration, e.g. omni-directional or directional;
- Support for duplex mode, e.g. half-duplex or full-duplex;
- an NN identifier, for example, to determine a car sharing fleet;
- a type of the vehicle, for example, electric or fuel;
- power drain/consumption profile which can be collected from previous NN operation and can show how long the allocated battery capacity can be utilized for NN operation for different RATs;
- a predicted trajectory for the at least one NN, when it is on the move; and
- speed/velocity information can also be quantized, e.g., low, medium, and high speed;

The NN can send its context information by using an already existing connection between its embedded radio terminal and the BS (UE mode) for reporting. Alternatively, the NN can establish and use an existing vehicle-to-vehicle link, which may for example be specified by IEEE802.1 1p, in order to send the measurements via an active serving NN. Alternatively, the NN can use dedicated signaling channel for NN specific information. Alternatively, the context information may be sent by using a combination of the above options, for example, based on data volume, data rate, latency requirements, link quality and/or link stability.

In a next step 103 of the method 100, the network determines, whether the at least one NN is an appropriate active NN or a potential NN based on the context information received in step 102. That is, the network, for example a BS, selects appropriate serving NNs and candidate serving NNs based on the NN context information, and preferably also based on available network information and status, like:
- NN context information;
- a load of the serving NN on the access link;
- a load on the backhaul link;
- a load in the macrocell. In case of control and data plane decoupling, the macrocell may manage the control plane, and the data plane is provided by the NNs;
- a parking duration predicted by the network;
- actual demand in the region/hot spot;
- a predicted demand duration, for example, by taking into account history and collected statistics;
- target key performance indicators (KPIs) before NN activation, and predicted gains after NN activation;

In a next step 104 of the method 100, the network instructs the at least one NN to switch to an active NN mode or a potential NN mode, if it determines that the at least one NN is an appropriate active NN or potential NN. The BS can decide to activate more than one NN depending on the target service region and/or load. Parking trellis and/or location information can be used to deselect some candidate NNs beforehand. In particular, the network, e.g. the BS, sends/switches the mode of operation of an NN:
- from UE mode to NN mode, i.e. it stops the existing connection between the embedded radio terminal of the NN and the BS (optional). The NN then operates as an access node, and provides or can provide connections to surrounding UEs, and/or:
- from a potential NN mode, i.e. the NN is available and has been registered by the BS, but does not actively serve any UE, to active NN mode, i.e. the NN is actively serving at least one UE or can provide connections to UEs. In the latter case, the NN may be activated to be ready for providing connections. That means, even if there are no connections to UEs yet, the NN may already send reference signals or beacons, so that the UEs can detect the NN, or the NN may receive reference signals or beacons, so that the NN may detect the UEs. One or more NNs may, for example, be activated to be ready for providing connections, when the network predicts, e.g., a UE group moving toward the target service region.

Fig. 1b shows a method 110 according to another basic embodiment of the present invention for deactivating at least one NN in a network. The method starts with a step 111, in which at least one NN provided on a vehicle sends a trigger message to the network, when the vehicle enters a determined motion state, location state, and/or operation state.

In particular, when an NN will become unavailable, the NN sends the trigger message to the overlaying network e.g. the BS of the macrocell, corresponding to the messages reporting its availability. The trigger message may be sent:
- after the engine of the vehicle is switched on and/or the vehicle leaves parking mode;
- when the speed of the vehicle is beyond a determined range;
- when the vehicle leaves the target service region determined by its navigation system and/or communicated by other NNs that are out of the target service region;
- when the vehicle is notified by a push service in the region where the NN resides;
- when the vehicle is plugged out for charging;
- when the vehicle battery status decreases below a determined threshold value;
- when the owner of the vehicle manually switches off the NN mode;

Specifically, the vehicle may enter the above-mentioned determined motion state, if at least one of the following events occurs: at least one engine of the vehicle is at least partly switched on, the partly switched off engine of the vehicle is switched on, the vehicle leaves a parking mode, and the speed of the vehicle is larger than a determined threshold value.

Specifically, the vehicle may enter the above-mentioned determined location state, if at least one of the following events occurs: the vehicle leaves a target region, and the vehicle is notified by a push service in its current region.

Specifically, the vehicle may enter the above-mentioned determined operation state, if at least one of the following events occurs: the vehicle stops charging, a battery level of the vehicle is equal to or decreases below a determined threshold value, and a NN mode of the vehicle is manually switched off.

There can be additional signaling to inform the network about the battery status of the NN, for instance that the battery status is below the determined threshold, and that the NN will thus stop operation soon, in order to keep the minimum battery level for the main functions of its vehicle. In this case, the NN will go to an idle state, and another appropriate NN will be activated. NNs can have different access node capabilities and battery restrictions that should be sent to the BS.

In a next step 112 of the method 110, the network determines whether the at least one NN is an active NN or a potential NN. In a step 113 of the method 110 the network removes the at least one NN from a list of potential NNs, if the at least one NN is a potential NN. In a step 114 of the method 110 the network instructs the at least one NN to switch out of an active NN mode after a determined transition time, if the at least one NN is an active NN.

The determined transition time is at least one of: a time, during which the at least one NN to be deactivated and at least one other active NN in the network are simultaneously serving at least one common UE, a time, during which the at least one NN to be deactivated is synchronized with at least one other active NN in the network, a time, during which the UEs associated with the at least one NN to be deactivated are handed over or associated to other access nodes, and a time, which is determined based on requirements of at least one service provided by the network.

If the leaving NN is not an active NN but a potential NN, in the step 113 of the method 110, it is also possible that the network and/or the active NN itself updates a list of available NNs, and/or that the network and/or the active NN itself updates the list of potential NNs.

Alternatively, it is also possible that if the leaving NN is an active node, the network and/or relevant NNs themselves initiate a smooth transition, during which both the candidate active NN and the leaving active NN are communicating with the mobile terminals. This can be particularly important for certain RATs on the access and/or backhaul links, e.g. mm-Wave backhaul. For the transition phase, the leaving active NN and the candidate active NN are preferably synchronized.

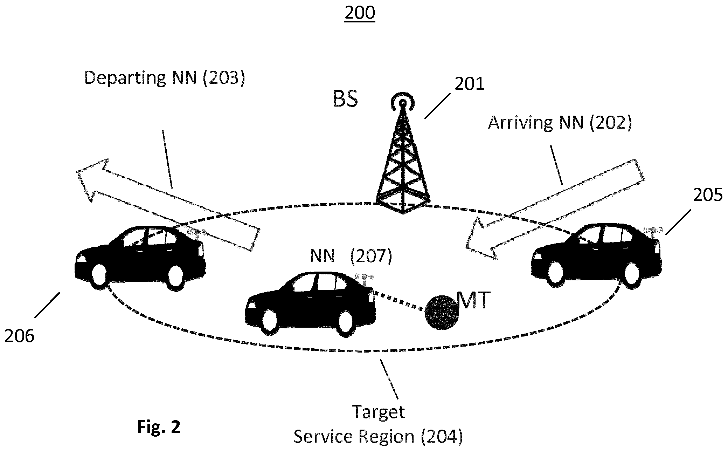

Figure 2 shows a network 200 represented by a base station (BS) 201, and a situation in which a first departing NN 203 is departing a target service region 204 on a vehicle 206, i.e. the NN 203 will become unavailable, and in which a second arriving NN 202 is arriving at the target service region 204 on a vehicle 205, and may be selected as the next serving NN by the BS 201. A third NN 207 in the target service region 204 has a connection to the network 200 and is serving a MT.

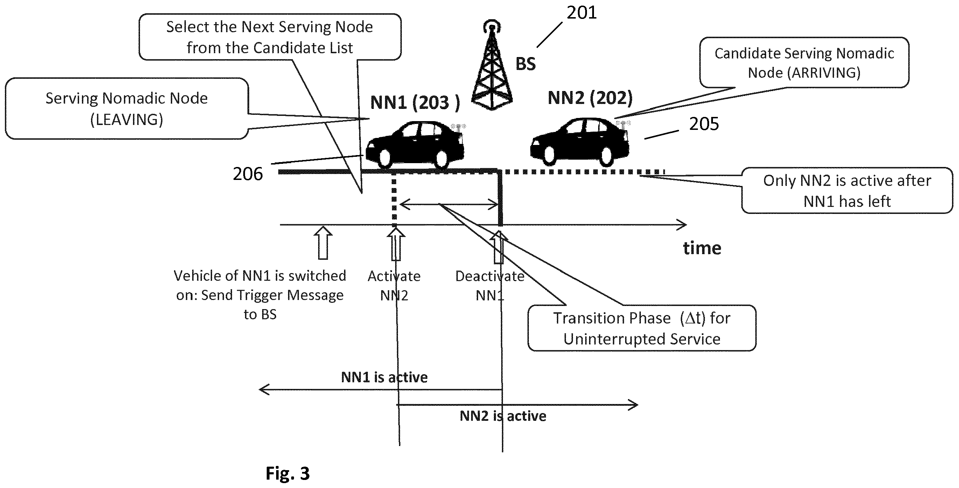

Figure 3 shows the same situation with respect to a time axis. The first serving NN, NN1, 203 is leaving the service target region 204, while the second candidate serving NN, NN2, 202 is arriving at the service target region 204. At first, e.g. when the vehicle 206 carrying the serving NN1 203 is switched on, the NN1 203 sends a trigger message to the BS 201 for indicating that it will leave the service target region and needs to be deactivated. Then, the new serving NN, NN2, 202 is selected as next serving NN, for example from a candidate list, and is activated by the base station 201 according to the above-described activation method. Now both NNs 202 and 203 serve the network 200. After this transition phase Δt, during which the two NNs 202 and 203 are both active, the NN 203 is deactivated, and only the NN2 202 remains active after the NN 203 has left.

The transition phase Δt allows for an uninterrupted service. The transition phase Δt can be determined based on the requirements of the provisioned services, for example, a delay tolerance and buffer status at the NNs 202 and/or 203 and/or the BS 201.

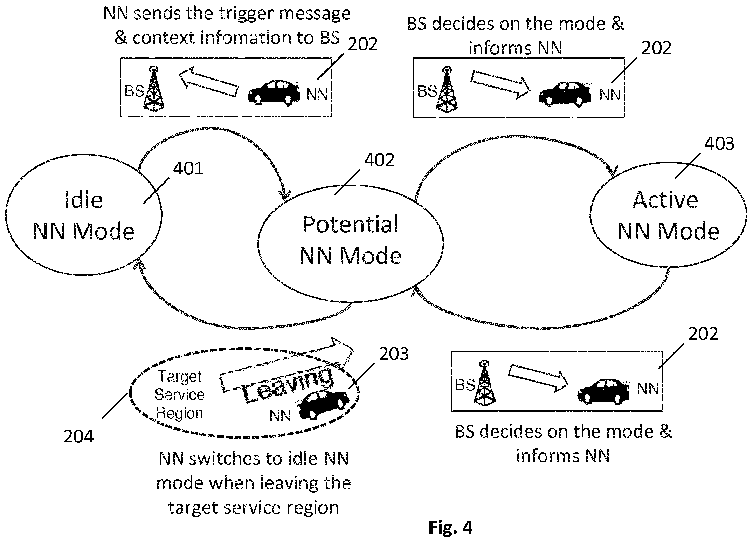

In order to increase the operational efficiency of NNs in the network 200, NNs can further be in different modes, which are described in the following with reference to Figure 4. Figure 4 depicts an example illustration for mode/state transitions. When, for example, an NN is not actively serving any UE, e.g. the NN is outside the target service region 204, while driving with high speed, the NN may stay in the idle NN mode 401. During the idle NN mode 401, the NN may have an active UE mode, in which it can communicate with the network 200 and operate as a normal UE, e.g. for obtaining target service region maps and for updating its location. Further, the NN may have a moving relay mode, in which it can serve in-vehicle users and/or outside-vehicle users.

The idle NN mode can include that when an NN switches to its active UE mode, the NN only provides required information, such as location and left battery status. During the idle NN mode, when the NN is capable of serving in-car users, it may switch to Mobile Access Node Mode, e.g., moving relay mode.

As explained before, when a new NN 202 becomes available in a target service region 204 of the network 200, the NN 202 first sends a trigger message and then sends context information to the network 200, e.g. the BS 201, in order to be admitted by the BS 201. Thereby, it changes its mode from idle NN mode 401 to potential NN mode 402.

The NN 203 changes its mode from potential mode 402 to idle mode 401 when it leaves the target service region 204.

When the BS 201 decides that the NN 202 is selected as a new serving NN, it also decides on the mode of the NN 202. Accordingly, it may inform or instruct the NN 202 to change its status from potential NN mode 402 to active NN mode 403. When the base station 201 deciding on the mode decides that an NN, for example the previously activated NN 202, should not be anymore a serving NN but a candidate NN, it may inform or instruct the NN 202 to switch its mode from active NN mode 403 to potential NN mode 402.

State transitions may occur between any of the explained modes 401, 402 and 403. For example, when a serving NN 203 leaves the target service region 204, it can also switch its mode from the active NN mode 403 to the idle NN mode 401.

Furthermore, different types of NNs can be defined. For instance, there can be emergency type-NNs, which can be directly started without receiving a command from the BS. There can also be regular operation-NNs, which follow the above-described activation procedure.

The potential NN mode 402 can be optional. That is, the NN 202 may switch from idle NN mode 401 directly to active NN mode 403. This may cause some delays between the idle mode 401 and active mode 403. The transition from active mode 403 to idle mode 401 may also be applied, for example, if the battery status is below a certain threshold and/or the provisioned services are delay tolerant.

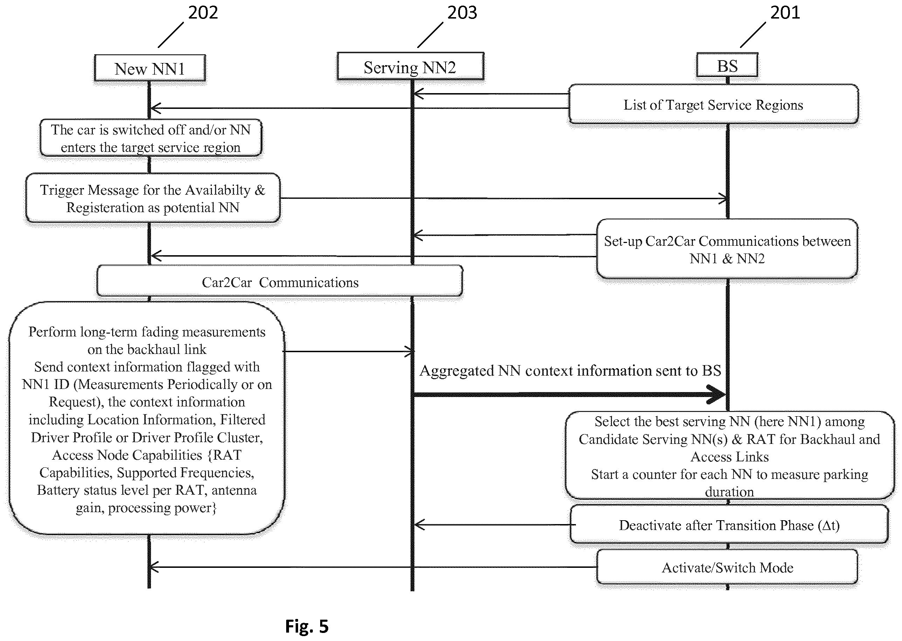

An example signal flow diagram for an NN activation and deactivation method according to an embodiment of the present invention, which bases on the basic embodiments shown in Figures 1a and 1b, respectively, is shown in Figure 5, wherein again the new NN 202 arrives at the target service region 204.

Before its arrival, the NN 203 is the active serving NN. The network 200, e.g. the BS 201, sends a list of target service regions 204 to the NNs, namely, the new NN1 202 and the serving NN2 203. When the NN 202 enters a target service region 204 provided by the base station 201 and/or if the vehicle 205 of the NN 202 enters a determined motion, location or operation state, for instance the engine of the vehicle 205 is switched off, the NN 202 sends the trigger message to the BS 201 to indicate availability and to register as a potential NN.

Since there is already an active serving NN 203, the BS 201 may control setting up a vehicle-to-vehicle link, for instance a Car2Car communication, between the vehicles 205 and 206, which carry the NNs 202 and 203, respectively. The NNs 202 and 203 may also set-up the vehicle-to-vehicle communication, for instance the Car2Car communication, in an ad-hoc manner, and the serving NN2 203 may inform the network 200 about the available vehicle-to-vehicle link. The NN 202 may further perform long-term fading measurements on the backhaul link, and send this information, along with the NN context information, through the vehicle-to-vehicle link to the BS 201. The measurements may be carried out periodically or only on request. For optimum performance, short-term fading measurements may also be sent to the BS 201, although this would increase the signaling overhead. The context information is preferably flagged with the ID of the NN. In Figure 5 the context information includes location information, a filtered driver profile or a driver profile cluster and access node capabilities, wherein the access node capabilities include RAT capabilities, supported frequencies, a battery status level per RAT, an antenna gain and processing power. A filtered driver profile may indicate a determined class of drivers, e.g., to eliminate privacy concerns.

The serving NN 203 can aggregate the received NN context information and measurement information pieces, and can send them to the BS 201. The BS 201 may then select the most appropriate serving NN among the available candidate serving NN(s). In this example, NN1 202 is selected as the serving NN. The BS 201 also selects the RAT for the backhaul and access links. The BS may also start a counter for NN 202, or each NN, to measure, for example, its parking duration. Thereafter, the BS 201 commands NN 203 to enter the potential NN mode 402 or the idle NN mode 401 (deactivation) after a determined transition phase Δt. The NN 202 will be activated, and it will switch its mode to the active NN mode 403. The BS 201 updates the list of available candidate serving NN(s). NN 202 shall also perform synchronization, for example based on Timing Advance, to enable communication to the network 200.

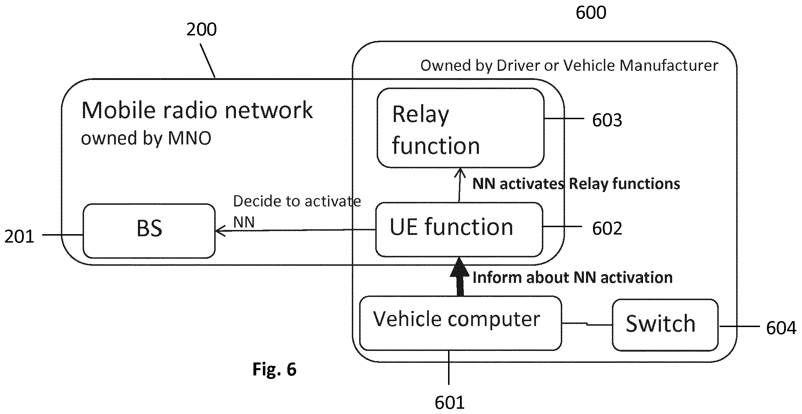

Figure 6 shows an example illustration of an interface between a vehicle computer 601 and a wireless access module 600 of an NN. The wireless access module of the NN 202 may include an UE function module 602 for communicating with the mobile radio network 200 owned by a mobile network operator (MNO), particularly a BS 201, and a relay function module 603 for serving in-vehicle and/or outside vehicle users. A switch 604 indicates, for example, that the vehicle enters the determined motion, location or operation state, the information being received by the vehicle computer 601. The vehicle computer 601 may then inform the UE function module that it should be activated as an NN, i.e. it should send a trigger message to the BS 201. The UE function module 602 may then decide to activate with the BS 201 as NN, and accordingly may carry out an activation method of the present invention. The UE function module 602 may also activate NN relay functions at the relay function module 603. The switch 604, the vehicle computer 601, e.g. car computer, the UE function module 602 and the relay function module 603 belong to the vehicle, i.e. may be owned by the driver or vehicle, e.g. car, manufacturer. The BS 201, the relay function module 603 and the UE function module 602 belong to the network 200, i.e. may be owned by the network operator.

In summary, the present invention enables demand-driven service provisioning for coverage and/or capacity enhancement. In particular, it enables for demand-driven service provisioning based on nomadic node.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Method (100) for activating at least one Nomadic Node, NN, (202) in a network (200), comprising:
receiving, by a base station (201), a trigger message from the at least one NN (202) provided on a vehicle (205), when the vehicle (205) enters a determined motion state and/or location state and/or operation state,
receiving, by the base station (201), context information of the at least one NN (202) from the at least one NN (202),
determining (103), by the base station (201), whether the at least one NN (202) is an appropriate active NN or potential NN based on the context information of the at least one NN (202), and
instructing (104), by the base station (201), the at least one NN (201) to switch to an active NN mode (403) or a potential NN mode (402), if it determines that the at least one NN (202) is an appropriate active NN or potential NN.

2. Method (100) according to claim 1, wherein the vehicle (205) enters the determined motion state, if at least one of the following events occurs:
at least one engine of the vehicle (205) is at least partly switched off,
the vehicle (205) enters a parking mode, and
the speed of the vehicle (205) is within a determined range for a determined period of time.

3. Method (100) according to claim 1 or 2, wherein the vehicle (205) enters the determined location state, if at least one of the following events occurs:
the vehicle (205) enters a target region (204),
the vehicle (205) is notified by a push service in its current region, and
the at least one NN (202) determines at least a determined number of user equipments, UEs, in its vicinity.

4. Method (100) according to one of the claims 1 to 3, wherein the vehicle (205) enters the determined operation state, if at least one of the following events occurs:
the vehicle (205) starts charging,
a battery level of the vehicle (205) is equal to or increases above a determined threshold value, and
a NN mode of the vehicle (205) is manually switched on.

5. Method (100) according to one of the claims 1 to 4, wherein the context information comprises at least one of:
information indicating a backhaul link quality of the at least one NN (202),
a Signal to Interference plus Noise Ratio, SINR, long-term and/or short term backhaul link measurement,
information indicating available RATs for the backhaul link,
information indicating a vehicle-to-vehicle link quality used by the at least one NN (202),
information indicating an access link quality of the at least one NN (202) to at least one target UE,
information indicating available RATs for an access link of the at least one NN (202) to at least one target UE,
a type identification information, type ID, of the at least one NN (202),
a driver profile of the vehicle (205),
location information of the at least one NN (202), and
a predicted battery level for a given Radio Access Technology, RAT.

6. Method (100) according to one of the claims 1 to 5, wherein the determining, by the base station (201), whether the at least one NN (202) is an appropriate active NN or potential NN is further based on available network information and/or on a network status.

7. Method (100) according to claim 6, wherein the available network information and/or network status comprises at least one of:
context information of at least one other active NN in the network (200),
information indicating a load on at least one active NN, a backhaul link, and/or a macro-cell of the network (200),
demand information or a predicted demand duration of the network (200), and
predicted performance gains for the network (200) caused by a potential switching of the at least one NN (202) to the active NN mode (403).

8. Method (110) for deactivating at least one Nomadic Node, NN, (203) in a network (200), comprising:
receiving, by a base station (201), a trigger message from the at least one NN (203) provided on a vehicle (206), when the vehicle (206) enters a determined motion state and/or location state and/or operation state,
determining (112), by the base station (201), whether the at least one NN (203) is an active NN or a potential NN, and
removing (113), by the base station (201), the at least one NN (203) from a list of potential NNs, if the at least one NN is a potential NN, or
instructing (114), by the base station (201), the at least one NN (203) to switch out of an active NN mode (403) after a determined transition time, if the at least one NN (203) is an active NN.

9. Method (110) according to claim 8, wherein the vehicle (206) enters the determined motion state, if at least one of the following events occurs:
at least one engine of the vehicle (206) is at least partly switched on,
a partially switched off engine of the vehicle (206) is switched on,
the vehicle (206) leaves a parking mode, and
the speed of the vehicle (206) is larger than a determined threshold value.

10. Method (110) according to claim 8 or 9, wherein the vehicle (206) enters the determined location state, if at least one of the following events occurs:
the vehicle (206) leaves a target region (204), and
the vehicle (206) is notified by a push service in its current region.

11. Method (110) according to one of the claims 8 to 10, wherein the vehicle (206) enters the determined operation state, if at least one of the following events occurs:
the vehicle (206) stops charging,
a battery level of the vehicle (206) is equal to or decreases below a determined threshold value, and
a NN mode of the vehicle (206) is manually switched off.

12. Method (110) according to one of the claims 8 to 11, wherein the determined transition time is at least one of:
a time, during which the at least one NN (203) to be deactivated and at least one other active NN in the network (200) are simultaneously serving at least one common UE,
a time, during which the at least one NN (203) to be deactivated is synchronized with at least one other active NN in the network (200),
a time, during which the UEs associated with the at least one NN (203) to be deactivated are handed over or associated to other access nodes, and
a time, which is determined based on requirements of at least one service provided by the network (200).

13. Method (110) according to one of the claims 8 to 12, wherein
the at least one deactivated NN (203) enters an idle NN mode (401), in which the at least one NN (203) has an active UE mode for communicating as a mobile terminal and/or a moving relay mode for serving at least one UE.

14. System comprising at least one Nomadic Node, NN, (202) provided on a vehicle (205) and a base station (201), wherein
the at least one NN (202) is configured to send a trigger message to the base station (201), when the vehicle (205) enters a determined motion state and/or location state and/or operation state,
the at least one NN (202) is configured to send context information of the at least one NN (202) to the base station (201),
the base station (201) is configured to determine, whether the at least one NN (202) is an appropriate active NN or potential NN based on the context information of the at least one NN (202), and
the base station (201) is configured to instruct the at least one NN (202) to switch to an active NN mode (403) or a potential NN mode (402), if it determines that the at least one NN (202) is an appropriate active NN or potential NN.

15. System comprising at least one Nomadic Node, NN, (203) provided on a vehicle (206) and a base station (201), wherein
the at least one NN (203) is configured to send a trigger message to the base station (201), when the vehicle (206) enters a determined motion state and/or location state and/or operation state,
the base station (201) is configured to determine, whether the at least one NN (203) is an active NN or a potential NN of the base station (201), and
the base station (201) is configured to remove the at least one NN (203) from a list of potential NNs, if the at least one NN (203) is a potential NN, and
the base station (201) is configured to instruct the at least one NN (203) to switch out of an active NN mode (403) after a determined transition time, if the at least one NN (203) is an active NN.

## Patentansprüche

1. Verfahren (100) zum Aktivieren mindestens eines Nomadic Node (NN) (202) in einem Netzwerk (200), wobei das Verfahren Folgendes umfasst:
Empfangen, durch eine Basisstation (201), einer Auslösernachricht von dem mindestens einen NN (202), der sich in einem Fahrzeug (205) befindet, wenn das Fahrzeug (205) in einen bestimmten Bewegungszustand und/oder Standortzustand und/oder Betriebszustand eintritt,
Empfangen, durch die Basisstation (201), von Kontextinformationen des mindestens einen NN (202) von dem mindestens einen NN (202),
Bestimmen (103), durch die Basisstation (201), auf der Basis der Kontextinformationen des mindestens einen NN (202), ob der mindestens eine NN (202) ein zweckmäßiger aktiver NN oder ein potenzieller NN ist, und
Instruieren (104), durch die Basisstation (201), des mindestens einen NN (201), zu einem aktiven NN-Modus (403) oder einem potenziellen NN-Modus (402) zu wechseln, wenn sie bestimmt, dass der mindestens eine NN (202) ein zweckmäßiger aktiver NN oder ein potenzieller NN ist.

2. Verfahren (100) nach Anspruch 1, wobei das Fahrzeug (205) in den bestimmten Bewegungszustand eintritt, wenn mindestens eines der folgenden Ereignisse eintritt:
mindestens ein Motor des Fahrzeugs (205) wird mindestens teilweise abgeschaltet,
das Fahrzeug (205) tritt in einen Parkmodus ein, und
die Geschwindigkeit des Fahrzeugs (205) liegt über einen bestimmten Zeitraum innerhalb eines bestimmten Bereichs.

3. Verfahren (100) nach Anspruch 1 oder 2, wobei das Fahrzeug (205) in den bestimmten Standortzustand eintritt, wenn mindestens eines der folgenden Ereignisse eintritt:
das Fahrzeug (205) tritt in eine Zielregion (204) ein,
das Fahrzeug (205) wird durch einen Push-Dienst in seiner momentanen Region benachrichtigt, und
der mindestens eine NN (202) bestimmt mindestens eine bestimmte Anzahl von Nutzerendgeräten (User Equipments, UEs) in seiner näheren Umgebung.

4. Verfahren (100) nach einem der Ansprüche 1 bis 3, wobei das Fahrzeug (205) in den bestimmten Betriebszustand eintritt, wenn mindestens eines der folgenden Ereignisse eintritt:
das Fahrzeug (205) beginnt zu laden,
ein Batterieladezustand des Fahrzeugs (205) wird mindestens so groß wie ein bestimmter Schwellenwert, und
ein NN-Modus des Fahrzeugs (205) wird manuell eingeschaltet.

5. Verfahren (100) nach einem der Ansprüche 1 bis 4, wobei die Kontextinformationen mindestens eines von Folgendem umfassen:
Informationen, die eine Backhaul-Link-Qualität des mindestens einen NN (202) anzeigen,
eine langzeitliche und/oder kurzzeitliche Signal-Interferenz-plus-Rausch-Verhältnis (Signal to Interference plus Noise Ratio, SINR)-Backhaul-Link-Messung, Informationen, die verfügbare RATs für den Backhaul-Link anzeigen, Informationen, die eine Fahrzeug-zu-Fahrzeug-Link-Qualität anzeigen, die durch den mindestens einen NN (202) verwendet wird,
Informationen, die eine Zugangs-Link-Qualität des mindestens einen NN (202) zu mindestens einem Ziel-UE anzeigen,
Informationen, die verfügbare RATs für einen Zugangs-Link des mindestens einen NN (202) zu mindestens einem Ziel-UE anzeigen,
eine Typ-Identifikations-Information (Type ID) des mindestens einen NN (202),
ein Fahrerprofil des Fahrzeugs (205),
Standortinformationen des mindestens einen NN (202), und
einen prognostizierten Batterieladezustand für eine gegebene Funkzugangstechnologie (Radio Access Technology, RAT).

6. Verfahren (100) nach einem der Ansprüche 1 bis 5, wobei das Bestimmen, durch die Basisstation (201), ob der mindestens eine NN (202) ein zweckmäßiger aktiver NN oder ein potenzieller NN ist, des Weiteren auf verfügbaren Netzwerkinformationen und/oder auf einem Netzwerkstatus basiert.

7. Verfahren (100) nach Anspruch 6, wobei die verfügbaren Netzwerkinformationen und/oder der Netzwerkstatus mindestens eines von Folgendem umfassen:
Kontextinformationen von mindestens einem anderen aktiven NN in dem Netzwerk (200),
Informationen, die eine Last auf mindestens einem aktiven NN, einem Backhaul-Link und/oder einer Makrozelle des Netzwerks (200) anzeigen,
Bedarfsinformationen oder eine prognostizierte Bedarfsdauer des Netzwerks (200), und
prognostizierte Leistungszuwächse für das Netzwerk (200), die durch einen potenziellen Wechsel des mindestens einen NN (202) zu dem aktiven NN-Modus (403) herbeigeführt werden.

8. Verfahren (110) zum Deaktivieren mindestens eines Nomadic Node (NN) (203) in einem Netzwerk (200), wobei das Verfahren Folgendes umfasst:
Empfangen, durch eine Basisstation (201), einer Auslösernachricht von dem mindestens einen NN (203), der sich in einem Fahrzeug (206) befindet, wenn das Fahrzeug (206) in einen bestimmten Bewegungszustand und/oder Standortzustand und/oder Betriebszustand eintritt,
Bestimmen (112), durch die Basisstation (201), ob der mindestens eine NN (203) ein aktiver NN oder ein potenzieller NN ist, und
Entfernen (113), durch die Basisstation (201), des mindestens einen NN (203) von einer Liste potenzieller NNs, wenn der mindestens eine NN ein potenzieller NN ist, oder
Instruieren (114), durch die Basisstation (201), des mindestens einen NN (203), nach einer bestimmten Übergangszeit aus einem aktiven NN-Modus (403) herauszuschalten, wenn der mindestens eine NN (203) ein aktiver NN ist.

9. Verfahren (110) nach Anspruch 8, wobei das Fahrzeug (206) in den bestimmten Bewegungszustand eintritt, wenn mindestens eines der folgenden Ereignisse eintritt:
mindestens ein Motor des Fahrzeugs (206) wird mindestens teilweise eingeschaltet,
ein teilweise abgeschalteter Motor des Fahrzeugs (206) wird eingeschaltet,
das Fahrzeug (206) verlässt einen Parkmodus, und
die Geschwindigkeit des Fahrzeugs (206) ist höher als ein bestimmter Schwellenwert.

10. Verfahren (110) nach Anspruch 8 oder 9, wobei das Fahrzeug (206) in den bestimmten Standortzustand eintritt, wenn mindestens eines der folgenden Ereignisse eintritt:
das Fahrzeug (206) verlässt eine Zielregion (204), und
das Fahrzeug (206) wird durch einen Push-Dienst in seiner momentanen Region benachrichtigt.

11. Verfahren (110) nach einem der Ansprüche 8 bis 10, wobei das Fahrzeug (206) in den bestimmten Betriebszustand eintritt, wenn mindestens eines der folgenden Ereignisse eintritt:
das Fahrzeug (206) hört auf zu laden,
ein Batterieladezustand des Fahrzeugs (206) befindet sich auf oder unter einem bestimmten Schwellenwert, und
ein NN-Modus des Fahrzeugs (206) wird manuell abgeschaltet.

12. Verfahren (110) nach einem der Ansprüche 8 bis 11, wobei die bestimmte Übergangszeit mindestens eines von Folgendem ist:
eine Zeit, während der der mindestens eine zu deaktivierende NN (203) und mindestens ein anderer aktiver NN in dem Netzwerk (200) gleichzeitig mindestens ein gemeinsames UE bedienen,
eine Zeit, während der der mindestens eine zu deaktivierende NN (203) mit mindestens einem anderen aktiven NN in dem Netzwerk (200) synchronisiert wird,
eine Zeit, während der die UEs, die mit dem mindestens einen zu deaktivierenden NN (203) verknüpft sind, an andere Zugangsknoten übergeben oder mit anderen Zugangsknoten verknüpft werden, und
eine Zeit, die auf der Basis von Anforderungen von mindestens einem durch das Netzwerk (200) erbrachten Dienst bestimmt wird.

13. Verfahren (110) nach einem der Ansprüche 8 bis 12, wobei der mindestens eine deaktivierte NN (203) in einen Leerlauf-NN-Modus (401) eintritt, in dem der mindestens eine NN (203) einen aktiven UE-Modus zum Kommunizieren als ein mobiles Endgerät und/oder einen Modus als sich bewegendes Relais zum Bedienen mindestens eines UE hat.

14. System, das mindestens einen Nomadic Node (NN) (202), der sich in einem Fahrzeug (205) befindet, und eine Basisstation (201) umfasst, wobei
der mindestens eine NN (202) dafür konfiguriert ist, eine Auslösernachricht an die Basisstation (201) zu senden, wenn das Fahrzeug (205) in einen bestimmten Bewegungszustand und/oder Standortzustand und/oder Betriebszustand eintritt,
der mindestens eine NN (202) dafür konfiguriert ist, Kontextinformationen des mindestens einen NN (202) an die Basisstation (201) zu senden,
die Basisstation (201) dafür konfiguriert ist, auf der Basis der Kontextinformationen des mindestens einen NN (202) zu bestimmen, ob der mindestens eine NN (202) ein zweckmäßiger aktiver NN oder ein potenzieller NN ist, und
die Basisstation (201) dafür konfiguriert ist, den mindestens einen NN (202) zu instruieren, zu einem aktiven NN-Modus (403) oder einem potenziellen NN-Modus (402) zu wechseln, wenn sie bestimmt, dass der mindestens eine NN (202) ein zweckmäßiger aktiver NN oder ein potenzieller NN ist.

15. System, das mindestens einen Nomadic Node (NN) (203), der sich in einem Fahrzeug (206) befindet, und eine Basisstation (201) umfasst, wobei
der mindestens eine NN (203) dafür konfiguriert ist, eine Auslösernachricht an die Basisstation (201) zu senden, wenn das Fahrzeug (206) in einen bestimmten Bewegungszustand und/oder Standortzustand und/oder Betriebszustand eintritt,
die Basisstation (201) dafür konfiguriert ist zu bestimmen, ob der mindestens eine NN (203) ein aktiver NN oder ein potenzieller NN der Basisstation (201) ist, und
die Basisstation (201) dafür konfiguriert ist, den mindestens einen NN (203) von einer Liste potenzieller NNs zu entfernen, wenn der mindestens eine NN (203) ein potenzieller NN ist, und
die Basisstation (201) dafür konfiguriert ist, den mindestens einen NN (203) zu instruieren, nach einer bestimmten Übergangszeit aus einem aktiven NN-Modus (403) herauszuschalten, wenn der mindestens eine NN (203) ein aktiver NN ist.

## Revendications

1. Procédé (100) pour activer au moins un nœud itinérant, NN (Nomadic Node), (202) dans un réseau (200), comprenant les étapes consistant à :
recevoir, par une station de base (201), un message de déclenchement provenant de l'au moins un NN (202) prévu sur un véhicule (205), lorsque le véhicule (205) passe dans un état de mouvement et/ou un état de localisation et/ou un état de fonctionnement déterminés,
recevoir, par la station de base (201), une information de contexte du ou des NN (202) en provenance dudit ou desdits NN (202),
déterminer (103), par la station de base (201), si le ou les NN (202) sont des NN actifs ou des NN potentiels appropriés sur la base des informations de contexte du ou des NN (202), et
ordonner (104), par la station de base (201), au ou aux NN (201) de passer à un mode NN actif (403) ou à un mode NN potentiel (402), si elle détermine que le ou les NN (202) sont des NN actifs ou des NN potentiels appropriés.

2. Procédé (100) selon la revendication 1, dans lequel le véhicule (205) passe dans l'état de mouvement déterminé, si au moins l'un des événements suivants se produit :
au moins un moteur du véhicule (205) étant au moins partiellement arrêté, le véhicule (205) passe en mode de stationnement, et
la vitesse du véhicule (205) se trouve dans une plage déterminée pendant une période de temps déterminée.

3. Procédé (100) selon les revendications 1 ou 2, dans lequel le véhicule (205) passe dans l'état de localisation déterminé, si au moins l'un des événements suivants se produit :
le véhicule (205) pénètre dans une région cible (204),
le véhicule (205) est averti par un service push dans sa région actuelle et le ou les NN (202) déterminent au moins un nombre déterminé d'équipements d'utilisateur, UE, se trouvant à proximité.

4. Procédé (100) selon l'une des revendications 1 à 3, dans lequel le véhicule (205) passe dans l'état de fonctionnement déterminé, si au moins l'un des événements suivants se produit :
le véhicule (205) commence sa charge,
un niveau de batterie du véhicule (205) est égal ou augmente au-dessus d'une valeur de seuil déterminée, et
un mode NN du véhicule (205) est activé manuellement.

5. Procédé (100) selon l'une des revendications 1 à 4, dans lequel les informations de contexte comprennent au moins l'une des informations suivantes :
des informations indiquant une qualité de liaison de retour du ou des NN (202),
un rapport signal sur interférence plus bruit, SINR (Signal to Interference plus Noise Ratio), une mesure de la liaison de retour à long terme et/ou à court terme,
des informations indiquant les technologies d'accès radio RAT (Radio Access Technology) disponibles pour la liaison de retour,
des informations indiquant une qualité de liaison de véhicule à véhicule utilisée par le ou les NN (202),
des informations indiquant une qualité de liaison d'accès du ou des NN (202) à au moins un UE cible,
des informations indiquant les RAT disponibles pour une liaison d'accès du ou des NN (202) à au moins un UE cible,
une information d'identification de type, ID de type, du ou des NN (202),
un profil de conducteur du véhicule (205),
des informations de localisation du ou des NN (202), et
un niveau de batterie prévu pour une technologie d'accès radio RAT donnée.

6. Procédé (100) selon l'une quelconque des revendications 1 à 5, dans lequel la détermination, par la station de base (201), du fait que le ou les NN (202) sont ou non des NN actifs ou des NN potentiels appropriés, est en outre basée sur les informations de réseau disponibles et/ou sur un état du réseau.

7. Procédé (100) selon la revendication 6, dans lequel les informations disponibles sur le réseau et/ou l'état du réseau comprennent au moins l'un des éléments suivants :
des informations de contexte d'au moins un autre NN actif dans le réseau (200), des informations indiquant une charge sur au moins un NN actif, une liaison de retour, et/ou
une macro-cellule du réseau (200),
des informations de demande ou une durée de demande prévue du réseau (200), et des gains de performance prévus pour le réseau (200) provoqués par un passage potentiel du ou des NN (202) au mode NN actif (403).

8. Procédé (110) pour désactiver au moins un nœud itinérant, NN (203) dans un réseau (200), comprenant les étapes consistant à :
recevoir, par une station de base (201), un message de déclenchement provenant d'au moins un NN (203) prévu sur un véhicule (206), lorsque le véhicule (206) passe dans un état de mouvement et/ou un état de localisation et/ou un état de fonctionnement déterminés,
déterminer (112), par la station de base (201), si le ou les NN (203) sont des NN actifs ou des NN potentiels, et
retirer (113), par la station de base (201), le ou les NN (203) d'une liste de NN potentiels, si le ou les NN sont des NN potentiels, ou
ordonner (114), par la station de base (201), que le ou les NN (203) quittent un mode NN actif (403) après un temps de transition déterminé si le ou les NN (203) sont des NN actifs.

9. Procédé (110) selon la revendication 8, dans lequel le véhicule (206) passe dans l'état de mouvement déterminé, si au moins l'un des événements suivants se produit :
au moins un moteur du véhicule (206) est au moins partiellement allumé, un moteur partiellement éteint du véhicule (206) est allumé, le véhicule (206) quitte le mode de stationnement et la vitesse du véhicule (206) est supérieure à une valeur de seuil déterminée.

10. Procédé (110) selon les revendications 8 ou 9, dans lequel le véhicule (206) passe dans l'état de localisation déterminé, si au moins l'un des événements suivants se produit :
le véhicule (206) quitte une région cible (204),
le véhicule (206) est averti par un service push dans sa région actuelle.

11. Procédé (110) selon l'une des revendications 8 à 10, dans lequel le véhicule (206) passe dans l'état de fonctionnement déterminé, si au moins l'un des événements suivants se produit :
le véhicule (206) arrête sa charge,
un niveau de batterie du véhicule (206) est égal à ou diminue en-dessous d'une valeur de seuil déterminée, et
un mode NN du véhicule (206) est désactivé manuellement.

12. Procédé (110) selon l'une quelconque des revendications 8 à 11, dans lequel le temps de transition déterminé est au moins l'un des suivants :
un temps pendant lequel l'au moins un NN (203) à désactiver et au moins un autre NN actif dans le réseau (200) desservent simultanément au moins un UE commun,
un temps pendant lequel l'au moins un NN (203) à désactiver est synchronisé avec au moins un autre NN actif dans le réseau (200),
un temps pendant lequel les UE associés au ou aux NN (203) à désactiver sont transmis ou associés à d'autres nœuds d'accès, et
un temps, qui est déterminé en fonction des exigences d'au moins un service fourni par le réseau (200).

13. Procédé (110) selon l'une des revendications 8 à 12, dans lequel le ou les NN désactivés (203) passent dans un mode NN de repos (401), dans lequel le ou les NN (203) possèdent un mode UE actif pour communiquer en tant que terminal mobile et/ou un mode de relais mobile pour desservir au moins un UE.

14. Système comprenant au moins un nœud itinérant, NN (202) prévu sur un véhicule (205) et une station de base (201), dans lequel
le ou les NN (202) sont configurés pour envoyer un message de déclenchement à la station de base (201), lorsque le véhicule (205) passe dans un état de mouvement et/ou un état de localisation et/ou un état de fonctionnement déterminés,
le ou les NN (202) sont configurés pour envoyer des informations de contexte du ou des NN (202) à la station de base (201),
la station de base (201) est configurée pour déterminer si le ou les NN (202) sont des NN actifs appropriés ou des NN potentiels sur la base des informations de contexte du ou des NN (202), et
la station de base (201) est configurée pour ordonner au ou aux NN (202) de passer à un mode NN actif (403) ou à un mode NN potentiel (402), si elle détermine que le ou les NN (202) sont des NN actifs ou des NN potentiels appropriés.

15. Système comprenant au moins un nœud itinérant, NN (203) prévu sur un véhicule (206) et une station de base (201), dans lequel
le ou les NN (203) sont configurés pour envoyer un message de déclenchement à la station de base (201), lorsque le véhicule (206) passe dans un état de mouvement et/ou un état de localisation et/ou un état de fonctionnement déterminés,
la station de base (201) est configurée pour déterminer si le ou les NN (203) sont des NN actifs ou des NN potentiels de la station de base (201), et
la station de base (201) est configurée pour retirer le ou les NN (203) d'une liste de NN potentiels, si le ou les NN (203) sont des NN potentiels, ou
la station de base (201) est configurée pour ordonner au ou aux NN (203) de quitter un mode NN actif (403) après un temps de transition déterminé si le ou les NN (203) sont des NN actifs.
